# EUROPEAN PATENT APPLICATION

(11) **EP 4 674 813 A1**
(43) Date of publication of application: **07.01.2026**
(21) Application number: 24763583.2
(22) Date of filing: 09.02.2024
(51) Int. Cl.: C01D 15/02, C01B 17/28, H01B 1/10, H01B 13/00, H01M 10/0562

(54) **METHOD FOR PRODUCING LITHIUM HYDROXIDE, METHOD FOR PRODUCING LITHIUM-CONTAINING SULFIDE SOLID ELECTROLYTE RAW MATERIAL, AND METHOD FOR PRODUCING SULFIDE SOLID ELECTROLYTE**

(30) Priority: 01.03.2023 JP 2023031335
(71) Applicant: AGC INC., Chiyoda-ku, Tokyo 1008405 (JP)
(72) Inventor: ANDO Ryota, Tokyo 100-8405 (JP)
(74) Representative: Müller-Boré & Partner Patentanwälte PartG mbB
(86) International application number: PCT/JP2024/004665
(87) International publication number: WO 2024/181099

(57) **Abstract**

Provided is a method for producing lithium hydroxide, the method comprising: reacting lithium carbonate and calcium hydroxide in a liquid to obtain a solution containing lithium hydroxide; subjecting the solution to solid-liquid separation into a liquid component containing the lithium hydroxide and a solid component containing lithium derived from the lithium carbonate; and recovering lithium hydroxide from the liquid component.

## Description

### TECHNICAL FIELD

The present invention relates to a method for producing lithium hydroxide, a method for producing a sulfide solid electrolyte raw material containing lithium, and a method for producing a sulfide solid electrolyte, and more particularly to a method for producing lithium hydroxide, a method for producing lithium sulfide, a method for producing a sulfide solid electrolyte raw material containing lithium, a method for producing lithium hydroxide and a sulfide solid electrolyte raw material containing lithium, a method for producing a sulfide solid electrolyte, a lithium hydroxide-containing composition for synthesizing a sulfide solid electrolyte, a lithium sulfide-containing composition for synthesizing a sulfide solid electrolyte, and a lithium halide-containing composition for synthesizing a sulfide solid electrolyte.

### BACKGROUND ART

Lithium ion secondary batteries are widely used in portable electronic devices such as mobile phones and notebook computers. Conventionally, liquid electrolytes have been used in lithium ion secondary batteries. On the other hand, in recent years, attention has been paid to an all-solid-state lithium ion secondary battery in which a solid electrolyte is used as an electrolyte of a lithium ion secondary battery because improvement in safety, high-speed charging and discharging, miniaturization of a case, and the like can be expected.

Examples of the solid electrolyte used in the all-solid-state lithium ion secondary battery include a sulfide solid electrolyte. Lithium sulfide, which is one of raw materials of the sulfide solid electrolyte, is obtained, for example, by reacting lithium hydroxide with hydrogen sulfide. Lithium halide, which is one of the raw materials of the sulfide solid electrolyte, is also obtained, for example, by reacting lithium hydroxide with hydrogen halide. As described above, lithium hydroxide is used for synthesizing lithium sulfide and lithium halide, which are raw materials of the sulfide solid electrolyte. For the synthesis of such lithium hydroxide, a method of reacting lithium carbonate with calcium hydroxide is known (for example, Patent Literature 1).

### CITATION LIST

### PATENT LITERATURE

Patent Literature 1: JP2021-172537A

### SUMMARY OF INVENTION

### TECHNICAL PROBLEM

In the method of synthesizing lithium hydroxide by reacting lithium carbonate and calcium hydroxide, lithium hydroxide is synthesized by adding lithium carbonate and calcium hydroxide to water and stirring them, and then lithium hydroxide is recovered by being dissolved in water. However, when the aqueous solution is recovered, the solid content to be removed by the solid-liquid separation includes unreacted lithium carbonate or a lithium hydroxide aqueous solution which is synthesized by the reaction but exists wet with the solid content. Therefore, at the time of solid-liquid separation, the lithium component is also removed together with the solid content, and there is a problem that the recovery rate of the lithium component as lithium hydroxide is low.

In order to increase the recovery rate of the lithium component as lithium hydroxide, the solid content removed by the solid-liquid separation is recovered, and water is added again, whereby unreacted lithium carbonate can be reacted to obtain lithium hydroxide, or lithium hydroxide present wet with the solid content can be dissolved in water and recovered. However, in that case, in order to increase the recovery rate of the lithium component, it is necessary to assemble a number of similar steps, and there is a problem that the manufacturing equipment becomes large.

In order to reduce the amount of unreacted lithium, it is effective to increase the amount of calcium hydroxide to be charged, but there is a problem that the purchase cost increases because the amount of lithium hydroxide to be used increases.

Although the recovery rate of lithium hydroxide can be increased by increasing the amount of water, there is a problem that the energy cost required for removing water in the subsequent drying step is increased due to a large amount of water.

Since only lithium hydroxide can be obtained as a raw material for a sulfide solid electrolyte in the conventional method, a raw material for a sulfide solid electrolyte which is also necessary cannot be obtained, and there is also a problem that production efficiency of the raw material for a sulfide solid electrolyte is poor.

Therefore, an object of the present invention is to provide a method for efficiently producing lithium hydroxide at low cost, and a method for efficiently producing a sulfide solid electrolyte raw material and a sulfide solid electrolyte.

### SOLUTION TO PROBLEM

As a result of intensive studies, the present inventors have found a method in which, when lithium carbonate and calcium hydroxide are reacted in a liquid to synthesize lithium hydroxide, an elution amount of a lithium component with respect to water is reduced to allow the lithium component to remain not only on a liquid component side but also on a solid component side in subsequent solid-liquid separation, and lithium hydroxide is recovered from the liquid component, and a sulfide solid electrolyte raw material containing lithium is recovered from the solid component. According to the method, lithium hydroxide can be efficiently obtained from the liquid component side, and a sulfide solid electrolyte raw material containing lithium can also be obtained from the solid component side. Therefore, it has been found that, in the same production process, lithium hydroxide can be efficiently obtained from a liquid component at low cost, a sulfide solid electrolyte raw material containing lithium can be obtained from a solid component, and a sulfide solid electrolyte raw material and a sulfide solid electrolyte can be efficiently produced, and the present invention has been completed.

That is, the present invention relates to the following [1] to [21].
[1] A method for producing lithium hydroxide, including:
   reacting lithium carbonate with calcium hydroxide in a liquid to obtain a solution containing lithium hydroxide;
   subjecting the solution to solid-liquid separation into a liquid component containing the lithium hydroxide and a solid component containing lithium derived from the lithium carbonate; and
   recovering the lithium hydroxide from the liquid component.
[2] The method for producing lithium hydroxide according to [1], in which an amount of water with respect to a total liquid in which the lithium carbonate and the calcium hydroxide are reacted is 70 mass% to 96 mass%.
[3] The method for producing lithium hydroxide according to [1], in which a blending ratio of the calcium hydroxide to the lithium carbonate (calcium hydroxide/lithium carbonate) is 0.2 to 1.1 on a molar basis.
[4] The method for producing lithium hydroxide according to [1], in which a temperature of the liquid when the lithium carbonate and the calcium hydroxide are reacted is 10°C to 95°C.
[5] A method for producing lithium sulfide, including reacting the lithium hydroxide obtained by the production method according to any one of [1] to [4] with hydrogen sulfide to produce lithium sulfide.
[6] A method for producing a sulfide solid electrolyte, in which the lithium sulfide obtained by the production method according to [5] is used as a raw material.
[7] A method for producing a sulfide solid electrolyte raw material containing lithium, including:
   reacting lithium carbonate with calcium hydroxide in a liquid to obtain a solution containing lithium hydroxide;
   subjecting the solution to solid-liquid separation into a liquid component containing the lithium hydroxide and a solid component containing lithium derived from the lithium carbonate; and
   removing calcium in the solid component to obtain a sulfide solid electrolyte raw material containing lithium from the solid component.
[8] The method for producing a sulfide solid electrolyte raw material containing lithium according to [7], in which the calcium in the solid component is removed by adding sulfate ions to the solid component.
[9] The method for producing a sulfide solid electrolyte raw material containing lithium according to [7], in which the sulfide solid electrolyte raw material containing lithium is a lithium halide or lithium sulfate.
[10] A method for producing a sulfide solid electrolyte, including using the sulfide solid electrolyte raw material containing lithium obtained by the production method according to any one of [7] to [9].
[11] A method for producing lithium hydroxide and a sulfide solid electrolyte raw material containing lithium, including:
   reacting lithium carbonate with calcium hydroxide in a liquid to obtain a solution containing lithium hydroxide;
   subjecting the solution to solid-liquid separation into a liquid component containing the lithium hydroxide and a solid component containing lithium derived from the lithium carbonate;
   recovering the lithium hydroxide from the liquid component; and
   removing calcium in the solid component to obtain a sulfide solid electrolyte raw material containing lithium from the solid component.
[12] A method for producing a sulfide solid electrolyte, in which lithium sulfide obtained by reacting the lithium hydroxide obtained by the production method according to claim 11 with hydrogen sulfide and the sulfide solid electrolyte raw material containing lithium obtained by the production method according to [11] are used as raw materials.
[13] A lithium hydroxide-containing composition for synthesizing a sulfide solid electrolyte, containing lithium hydroxide and zinc.
[14] The lithium hydroxide-containing composition for synthesizing a sulfide solid electrolyte according to [13], further containing aluminum.
[15] The lithium hydroxide-containing composition for synthesizing a sulfide solid electrolyte according to [14], in which a sum of a zinc concentration and an aluminum concentration is 10 ppm by mass or more.
[16] The lithium hydroxide-containing composition for synthesizing a sulfide solid electrolyte according to any one of [13] to [15], further containing 10 ppm by mass or more of calcium.
[17] A lithium sulfide-containing composition for synthesizing a sulfide solid electrolyte, containing lithium sulfide and zinc.
[18] The lithium sulfide-containing composition for synthesizing a sulfide solid electrolyte according to [17], further containing aluminum.
[19] The lithium sulfide-containing composition for synthesizing a sulfide solid electrolyte according to [18], in which a sum of a zinc concentration and an aluminum concentration is 10 ppm by mass or more.
[20] The lithium sulfide-containing composition for synthesizing a sulfide solid electrolyte according to any one of [17] to [19], further containing 10 ppm by mass or more of calcium.
[21] A lithium halide-containing composition for synthesizing a sulfide solid electrolyte, containing a lithium halide and at least one of sulfate ions, phosphate ions, and fluorine ions, in which a concentration of the ions is 10 mass% or less.

### ADVANTAGEOUS EFFECTS OF INVENTION

According to the present invention, in the same production process, lithium hydroxide can be efficiently obtained from a liquid component at low cost, a sulfide solid electrolyte raw material containing lithium can be obtained from a solid component, and a sulfide solid electrolyte raw material and a sulfide solid electrolyte can be efficiently produced.

### BRIEF DESCRIPTION OF DRAWINGS

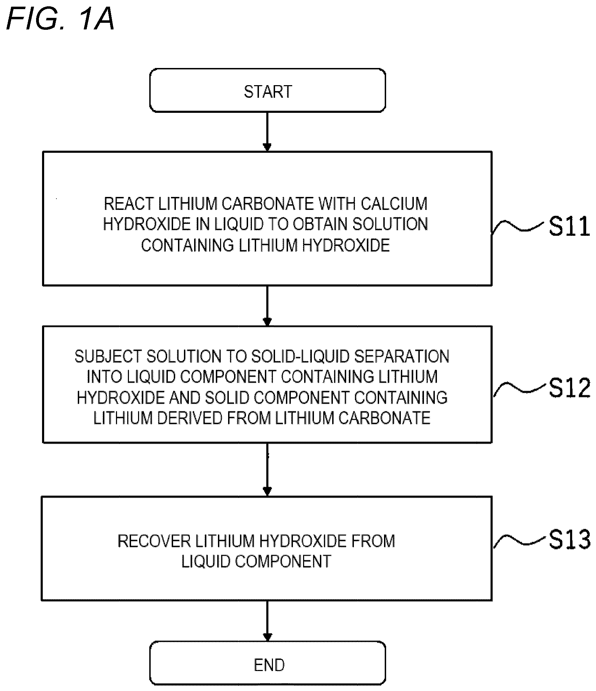

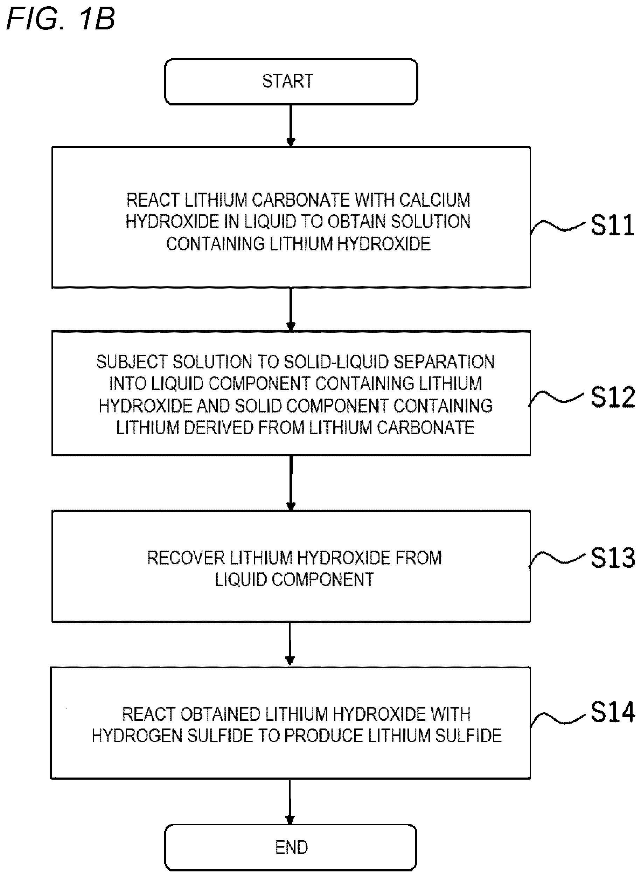

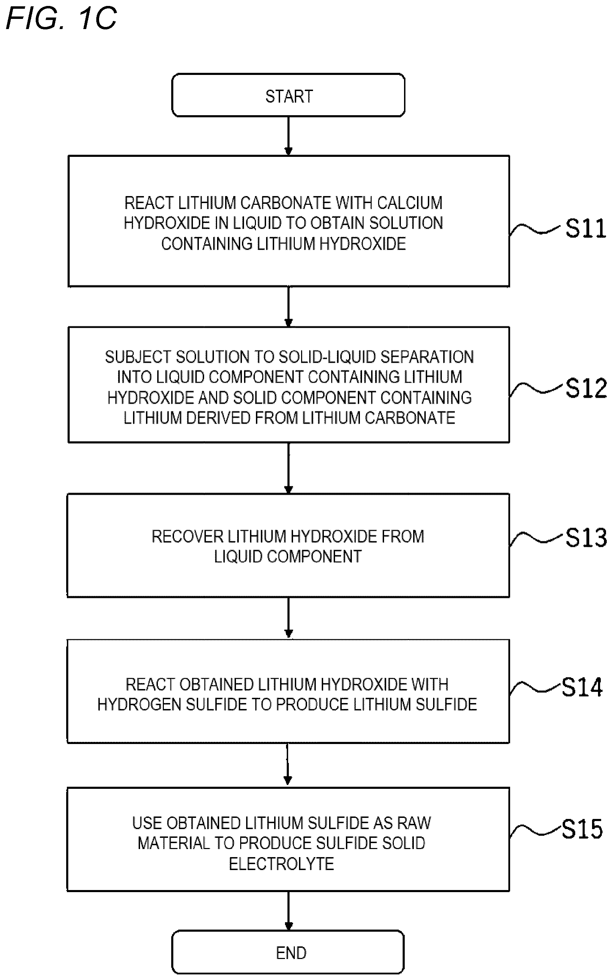

FIG. 1A shows a flowchart of a method for producing lithium hydroxide according to one embodiment of the present invention. FIG. 1B shows a flowchart of a method for producing lithium sulfide according to an embodiment of the present invention. FIG. 1C shows a flowchart of a first method for producing a sulfide solid electrolyte of one embodiment of the present invention.

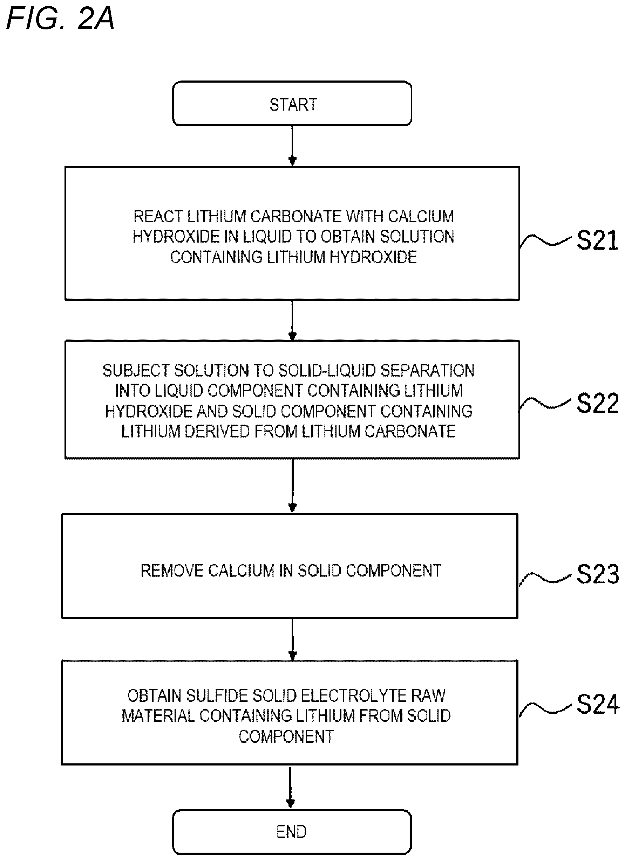

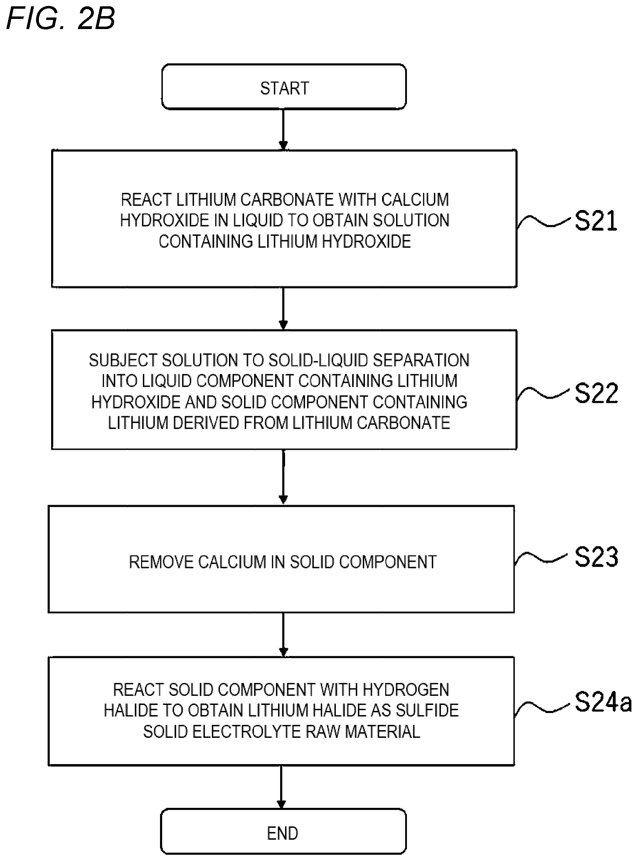

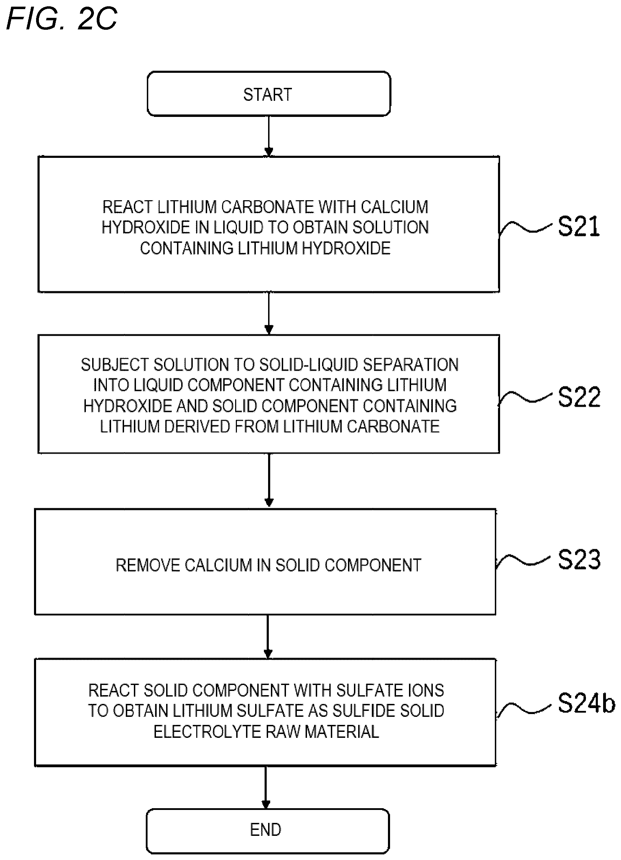

FIG. 2A shows a flowchart of a method for producing a sulfide solid electrolyte raw material containing lithium according to one embodiment of the present invention. FIG. 2B shows a flowchart of a method for producing a lithium halide as a sulfide solid electrolyte raw material containing lithium according to an embodiment of the present invention. FIG. 2C shows a flowchart of a method for producing lithium sulfate as a sulfide solid electrolyte raw material containing lithium according to an embodiment of the present invention.

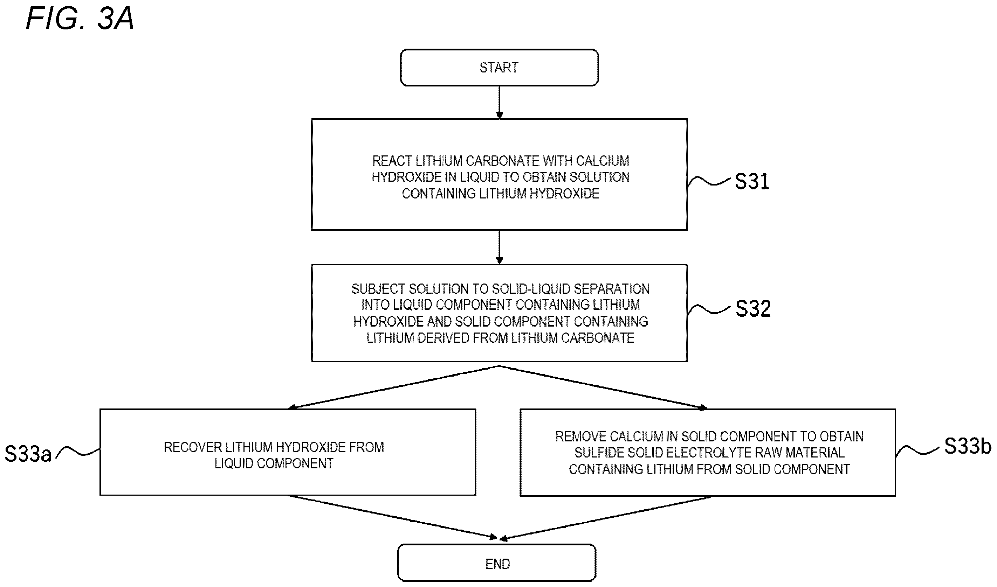

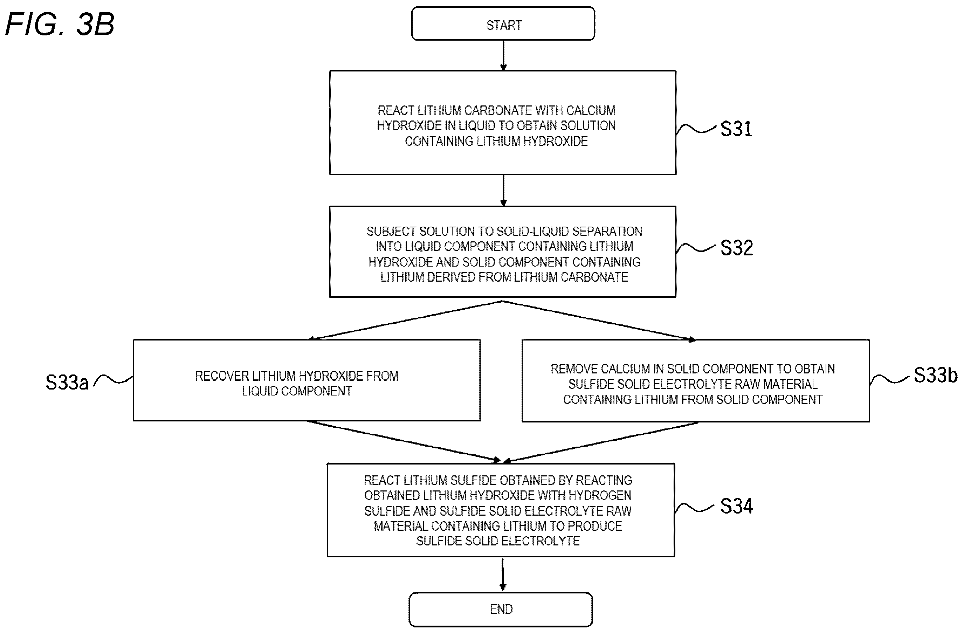

FIG. 3A shows a flowchart of a method for producing lithium hydroxide and a sulfide solid electrolyte raw material containing lithium according to one embodiment of the present invention. FIG. 3B shows a flowchart of a third method for producing a sulfide solid electrolyte according to an embodiment of the present invention.

### DESCRIPTION OF EMBODIMENTS

Hereinafter, the present invention will be described in detail, but the present invention is not limited to the following embodiments, and can be arbitrarily modified and implemented without departing from the gist of the present invention. In addition, "to" indicating a numerical range is used in a meaning including numerical values described before and after the numerical range as a lower limit value and an upper limit value.

### <<Method for Producing Lithium Hydroxide>>

A method for producing lithium hydroxide according to an embodiment of the present invention (hereinafter, also simply referred to as a method for producing lithium hydroxide) includes: reacting lithium carbonate and calcium hydroxide in a liquid to obtain a solution containing lithium hydroxide; subjecting the solution to solid-liquid separation into a liquid component containing lithium hydroxide and a solid component containing lithium derived from lithium carbonate; and recovering lithium hydroxide from the liquid component.

FIG. 1A shows an example of a flowchart of a method for producing lithium hydroxide. In the method for producing lithium hydroxide, first, lithium carbonate and calcium hydroxide are reacted in a liquid to obtain a solution containing lithium hydroxide (step S11). Subsequently, the obtained solution is subjected to solid-liquid separation into a liquid component containing lithium hydroxide and a solid component containing lithium derived from lithium carbonate (step S12). Of the obtained liquid component and solid component, lithium hydroxide is recovered from the liquid component (step S13). Steps S11 to S13 are preferably performed continuously, and the effect of the present invention is further enhanced when this continuous manufacturing method is employed.

Hereinafter, the method for producing lithium hydroxide will be described in detail for each of the above steps.

### <Preparation of Lithium Hydroxide Solution>

In the method for producing lithium hydroxide, first, lithium carbonate and calcium hydroxide are reacted in a liquid to obtain a solution containing lithium hydroxide (step S11). The step of reacting lithium carbonate and calcium hydroxide in a liquid to obtain a solution containing lithium hydroxide is represented by the following chemical reaction formula.

Li₂CO ₃+Ca(OH)₂⇒2LiOH+CaCO₃

Lithium carbonate used in the production of lithium hydroxide is not particularly limited, and for example, a commercially available product may be used, lithium carbonate may be produced by applying a current to a solution containing lithium ions and carbonate ions to precipitate lithium carbonate, or lithium carbonate extracted from lithium ion secondary battery waste may be used.

As will be described later, from the viewpoint that the lithium ion conductivity can be improved and the effect of suppressing the generation of H₂S can be obtained when the produced lithium hydroxide contains zinc and aluminum, the lithium carbonate preferably contains zinc and/or aluminum. In this case, the content of zinc with respect to lithium carbonate may be, for example, 1 ppm by mass to 20 ppm by mass, or 1 ppm by mass to 10 ppm by mass. The content of aluminum with respect to lithium carbonate may be, for example, 1 ppm by mass to 20 ppm by mass, or 1 ppm by mass to 10 ppm by mass.

The calcium hydroxide used for producing lithium hydroxide is not particularly limited, and for example, a commercially available product may be used, or a product obtained by reacting calcium oxide with water may be used.

As a method of reacting lithium carbonate and calcium hydroxide in a liquid, for example, lithium carbonate may be charged into a solvent to form a slurry or a solution of lithium carbonate, and calcium hydroxide may be added to a liquid such as the slurry or the solution. Here, the solvent is water or the like, and distilled water, ion exchange water, industrial water, or the like can be used. Among these, distilled water is preferable from the viewpoint of reducing impurities contained in water. The "liquid" in the "in the liquid" includes a slurry.

When water is used as the solvent, the amount of water used is preferably 70 mass% to 96 mass% with respect to the total liquid in which lithium carbonate and calcium hydroxide are reacted. When the amount of the water is 70 mass% or more, the slurry or solution of lithium carbonate and calcium hydroxide is sufficient, and lithium carbonate and calcium hydroxide can be sufficiently reacted in a liquid. When the amount of the water is 96 mass% or less, as described later, when the obtained solution containing lithium hydroxide is subjected to solid-liquid separation, lithium derived from lithium carbonate as a raw material can be sufficiently left on the solid component side. The amount of the water is preferably 70 mass% or more, more preferably 75 mass% or more, and even more preferably 80 mass% or more, and is preferably 96 mass% or less, more preferably 95 mass% or less, and even more preferably 94 mass% or less.

For the same reason as described above, the amount of water used with respect to 50 g of lithium carbonate is preferably 250 g to 2400 g. The amount of the water is more preferably 300 g or more, even more preferably 450 g or more, and even more preferably 600 g or more, and is preferably 2400 g or less, more preferably 2000 g or less, and even more preferably 1600 g or less.

When lithium carbonate and calcium hydroxide are reacted, the blending ratio of calcium hydroxide to lithium carbonate (calcium hydroxide/lithium carbonate) is preferably 0.2 to 1.1 on a molar basis. When the mixing ratio is 0.2 or more, lithium carbonate and calcium hydroxide can be sufficiently reacted, and lithium derived from lithium carbonate as a raw material can be sufficiently left on the solid component side. When the mixing ratio is 1.1 or less, it is possible to reduce the cost due to the excessive amount of calcium hydroxide to be added, and it is also possible to reduce the amount of sulfate ions to be used for removal when producing the sulfide solid electrolyte material described later.

The mixing ratio is preferably 0.2 or more, more preferably 0.3 or more, and even more preferably 0.5 or more, and is preferably 1.1 or less, more preferably 1.05 or less, and even more preferably 1.00 or less.

When lithium carbonate and calcium hydroxide are reacted, the temperature of the liquid (reaction temperature) is preferably 10°C to 95°C. When the temperature of the liquid is 10°C or higher, the reaction from lithium carbonate to lithium hydroxide sufficiently proceeds. When the temperature of the liquid is 95°C or less, the energy cost for heating can be reduced. The temperature of the liquid is preferably 10°C or higher, more preferably 20°C or higher, and even more preferably 30°C or higher, and is preferably 95°C or lower, more preferably 90°C or lower, and even more preferably 85°C or lower.

The pH of the liquid when lithium carbonate and calcium hydroxide are reacted in the liquid is preferably 10.1 to 11.1. When the pH of the liquid is 10.1 or more, the reaction between lithium carbonate and calcium hydroxide can be sufficiently performed. When the pH of the liquid is 11.1 or less, calcium hydroxide does not become excessive, and chemical cost and cost for removal can be suppressed. The pH of the liquid is preferably 10.1 or more, more preferably 10.3 or more, and is preferably 11.1 or less, more preferably 10.9 or less.

### <Solid-Liquid Separation>

In the method for producing lithium hydroxide, subsequently, the solution containing lithium hydroxide obtained in step S11 is subjected to solid-liquid separation into a liquid component containing lithium hydroxide and a solid component containing lithium derived from lithium carbonate (step S12).

The solid-liquid separation method is not particularly limited, and can be performed by a conventionally known method. Examples thereof include a filtration method and a centrifugal separation method. The filtration method is preferable in terms of energy cost, and the pressure filtration method is more preferable. The pressure in the case of using the pressure filtration method is not particularly limited, but is, for example, preferably 10 kPa or more, and more preferably 50 kPa or more in that the effect of increasing the filtration rate is easily obtained. The upper limit of the pressure is preferably equal to or less than the pressure resistance of the filter, for example, preferably 500 kPa or less, and more preferably 400 kPa or less.

By the solid-liquid separation, the solution containing lithium hydroxide is separated into a liquid component containing lithium hydroxide and a solid component containing lithium derived from lithium carbonate. In the present invention, as described above, when lithium carbonate and calcium hydroxide are reacted to synthesize lithium hydroxide, by adjusting the amount of water, the reaction temperature, the mixing ratio, and the like, lithium derived from lithium carbonate as a raw material can be left not only on the liquid component side but also on the solid component side in the solid-liquid separation. Thus, lithium hydroxide can be recovered from the liquid component, and a sulfide solid electrolyte raw material containing lithium can be recovered from the solid component. Therefore, lithium hydroxide can be efficiently produced at low cost, and thus the sulfide solid electrolyte raw material and the sulfide solid electrolyte can be efficiently produced.

### <Recovery of Lithium Hydroxide>

In the method for producing lithium hydroxide, subsequently, lithium hydroxide is recovered from the liquid component obtained in step S12 (step S13).

The method for recovering lithium hydroxide from the liquid component is not particularly limited, and may be a conventionally known method. For example, in order to remove the solvent from the liquid component, the temperature is gradually increased at a pressure of 1 kPa to 50 kPa using a reduced-pressure drying furnace, and the liquid component is heated to a maximum temperature of 50°C to 90°C. The heating time is, for example, 10 hours to 100 hours.

The recovery rate of lithium as lithium hydroxide, in other words, the ratio of lithium contained in the liquid component after solid-liquid separation to the entire lithium derived from lithium carbonate as a raw material is preferably 25% to 90% on a mass basis. When the recovery rate is 25% or more, a sufficient amount of lithium hydroxide can be obtained, and when the recovery rate is 90% or less, the cost required for recovering lithium hydroxide can be reduced, and lithium derived from lithium carbonate as a raw material can be sufficiently left on the solid component side.

The recovery rate is more preferably 30% or more, even more preferably 35% or more, and is more preferably 85% or less, even more preferably 80% or less.

The recovered lithium hydroxide preferably has a calcium concentration of 150 ppm by mass or less in the lithium hydroxide. The calcium concentration in the lithium hydroxide can be set to 150 ppm by mass or less by adjusting the amount of water, the blending ratio of the calcium hydroxide to the lithium carbonate, the temperature of the liquid, and the like at the time of the reaction between the lithium carbonate and the calcium hydroxide in step S11, bringing the lithium hydroxide into contact with an ion exchange resin, performing a solid-liquid separation step in a state where a recovery liquid is concentrated as described later, and the like.

The calcium concentration in lithium hydroxide is preferably 150 ppm by mass or less, more preferably 120 ppm by mass or less, and still more preferably 100 ppm by mass or less. The calcium concentration in lithium hydroxide is, for example, usually 10 ppm by mass or more.

When the calcium concentration in the recovered lithium hydroxide is decreased, the calcium content can be removed by removing water in a reduced-pressure drying furnace and performing solid-liquid separation in a state where the lithium concentration is concentrated. The solid-liquid separation at the time of removing calcium is preferably performed at a concentration of lithium hydroxide component of 6 mass% to 12 mass%. When the concentration of the lithium hydroxide component is 6 mass% or more, the amount of calcium contained can be sufficiently reduced. When the concentration of lithium hydroxide component is 12 mass% or less, not only calcium but also lithium can be prevented from being removed.

The concentration of lithium hydroxide component is preferably 6 mass% or more, more preferably 7 mass% or more, and is preferably 12 mass% or less, more preferably 10 mass% or less.

The lithium hydroxide obtained by the above production method preferably contains zinc. That is, as one aspect of the lithium hydroxide obtained by the above production method, a lithium hydroxide-containing composition for synthesizing a sulfide solid electrolyte containing lithium hydroxide and zinc is exemplified. When the composition contains zinc, the lithium ion conductivity of the sulfide solid electrolyte obtained using the composition can be improved, and the effect of suppressing the generation of H₂S can be obtained.

As described above, in order to contain zinc in the composition, zinc may be contained in lithium carbonate as a raw material, or zinc may be added at any stage of the production process of lithium hydroxide.

In the composition, the zinc concentration is preferably 5 ppm by mass or more, more preferably 10 ppm by mass or more, and even more preferably 15 ppm by mass or more, and is preferably 200 ppm by mass or less, more preferably 100 ppm by mass or less, and even more preferably 50 ppm by mass or less.

The composition preferably further contains aluminum. When the composition contains aluminum, the lithium ion conductivity of the sulfide solid electrolyte obtained using the composition can be improved, and the effect of suppressing the generation of H₂S can be obtained.

As described above, in order to contain aluminum in the composition, aluminum may be contained in lithium carbonate as a raw material, or aluminum may be added at any stage of the production process of lithium hydroxide.

In the composition, the aluminum concentration is preferably 1 ppm by mass or more, more preferably 2 ppm by mass or more, and even more preferably 3 ppm by mass or more, and is preferably 200 ppm by mass or less, more preferably 100 ppm by mass or less, and even more preferably 50 ppm by mass or less.

In the composition, the sum of the aluminum concentration and the zinc concentration is preferably 10 ppm by mass or more, more preferably 15 ppm by mass or more, and even more preferably 20 ppm by mass or more, and is preferably 400 ppm by mass or less, more preferably 200 ppm by mass or less, and even more preferably 100 ppm by mass or less.

The composition may further contain calcium. In the composition, the calcium concentration may be 10 ppm by mass or more, may be 25 ppm by mass or more, may be 50 ppm by mass or more, may be 150 ppm by mass or less, may be 120 ppm by mass or less, and may be 100 ppm by mass or less.

### <<Method for Producing Lithium Sulfide>>

A method for producing lithium sulfide of one embodiment of the present invention (hereinafter, also simply referred to as a method for producing lithium sulfide) is characterized in that lithium sulfide is produced by reacting the lithium hydroxide obtained by the method for producing lithium hydroxide of one embodiment of the present invention described above with hydrogen sulfide.

FIG. 1B shows a flowchart of the method for producing lithium sulfide. In the method for producing lithium sulfide, the lithium hydroxide obtained through steps S11 to S13 is reacted with hydrogen sulfide to produce lithium sulfide (step S14). Steps S11 to S14 are preferably performed continuously, and the effect of the present invention is further enhanced when this continuous manufacturing method is employed.

The method for reacting lithium hydroxide with hydrogen sulfide is not particularly limited, and for example, hydrogen sulfide may be used as a gas to react with lithium hydroxide powder, or lithium hydroxide may be dissolved in a solvent to prepare a lithium hydroxide solution, and hydrogen sulfide gas may be bubbled into the solution to react. Among them, it is preferable to perform the reaction by bubbling hydrogen sulfide gas.

As a condition for reacting the lithium hydroxide powder with the hydrogen sulfide gas, a method of introducing the hydrogen sulfide gas while stirring the powder is preferable in order to efficiently react the powder with the hydrogen sulfide. The temperature range is preferably 160°C to 220°C for efficient reaction.

As a condition for bubbling the hydrogen sulfide gas into the lithium hydroxide solution, for example, a nozzle is inserted into the lithium hydroxide solution, and bubbling is usually performed at a temperature range of 5°C to 40°C for 5 minutes to 180 minutes. The temperature range is preferably 10°C to 35°C, more preferably 15°C to 30°C. The bubbling time is preferably 10 minutes to 90 minutes, and more preferably 15 minutes to 75 minutes.

The lithium sulfide obtained by the above production method preferably contains zinc. That is, as one aspect of the lithium sulfide obtained by the above production method, a lithium sulfide-containing composition for synthesizing a sulfide solid electrolyte containing lithium sulfide and zinc is exemplified. When the composition contains zinc, the lithium ion conductivity of the sulfide solid electrolyte obtained using the composition can be improved, and the effect of suppressing the generation of H₂S can be obtained.

As described above, in order to contain zinc in the composition, zinc may be contained in lithium carbonate as a raw material, or zinc may be added at any stage of the production process of lithium sulfide.

In the composition, the zinc concentration is preferably 5 ppm by mass or more, more preferably 10 ppm by mass or more, and even more preferably 15 ppm by mass or more, and is preferably 200 ppm by mass or less, more preferably 100 ppm by mass or less, and even more preferably 50 ppm by mass or less.

The composition preferably further contains aluminum. When the composition contains aluminum, the lithium ion conductivity of the sulfide solid electrolyte obtained using the composition can be improved, and the effect of suppressing the generation of H₂S can be obtained.

As described above, in order to contain aluminum in the composition, aluminum may be contained in lithium carbonate as a raw material, or aluminum may be added at any stage of the production process of lithium sulfide.

In the composition, the aluminum concentration is preferably 1 ppm by mass or more, more preferably 2 ppm by mass or more, and even more preferably 3 ppm by mass or more, and is preferably 200 ppm by mass or less, more preferably 100 ppm by mass or less, and even more preferably 50 ppm by mass or less.

In the composition, the sum of the aluminum concentration and the zinc concentration is preferably 10 ppm by mass or more, more preferably 15 ppm by mass or more, and even more preferably 20 ppm by mass or more, and is preferably 400 ppm by mass or less, more preferably 200 ppm by mass or less, and even more preferably 100 ppm by mass or less.

The composition may further contain calcium. In the composition, the calcium concentration may be 10 ppm by mass or more, may be 25 ppm by mass or more, may be 50 ppm by mass or more, may be 150 ppm by mass or less, may be 120 ppm by mass or less, and may be 100 ppm by mass or less.

### «First Production Method of Sulfide Solid Electrolyte»

A method for producing a sulfide solid electrolyte according to an embodiment of the present invention (hereinafter, also simply referred to as a first method for producing a sulfide solid electrolyte) is characterized in that a sulfide solid electrolyte is produced using, as a raw material, lithium sulfide obtained by the method for producing lithium sulfide according to an embodiment of the present invention described above.

FIG. 1C shows a flowchart of a first method for producing a sulfide solid electrolyte. In the first method for producing a sulfide solid electrolyte, a sulfide solid electrolyte is produced using the lithium sulfide obtained through steps S11 to S14 as a raw material (step S15). Steps S11 to S15 are preferably performed continuously, and the effect of the present invention is further enhanced when this continuous manufacturing method is employed.

### (Sulfide Solid Electrolyte Raw Material)

In the first method for producing a sulfide solid electrolyte, another raw material of sulfide solid electrolyte (hereinafter, also simply referred to as another sulfide solid electrolyte raw material) other than lithium sulfide obtained by the method for producing lithium sulfide of one embodiment of the present invention described above may be used. As another sulfide solid electrolyte raw material, a commercially available sulfide solid electrolyte raw material may be used, or a sulfide solid electrolyte raw material produced from a material may be used. These sulfide solid electrolyte raw materials may be further subjected to a known pretreatment. That is, the present production method may appropriately include a step of producing another sulfide solid electrolyte raw material and a step of subjecting another sulfide solid electrolyte raw material to a pretreatment.

Hereinafter, another sulfide solid electrolyte raw material will be specifically described. In the following, lithium sulfide is exemplified as one of the sulfide solid electrolyte raw materials, but this means that lithium sulfide may be used as the sulfide solid electrolyte raw material separately from lithium sulfide obtained by the method for producing lithium sulfide of one embodiment of the present invention.

The sulfide solid electrolyte raw material usually contains an alkali metal element (R) and a sulfur element (S).

Examples of the alkali metal element (R) include a lithium element (Li), a sodium element (Na), and a potassium element (K), and among these, a lithium element (Li) is preferable. As the alkali metal element (R), a substance (component) containing an alkali metal element such as an alkali metal element alone or a compound containing an alkali metal element can be appropriately used in combination. Among them, as the lithium element, a substance (component) containing Li such as elemental Li or a compound containing Li can be appropriately used in combination.

Examples of the substance containing a lithium element (Li) include lithium compounds such as lithium sulfide (Li₂S), lithium iodide (LiI), lithium carbonate (Li₂CO₃), lithium sulfate (Li₂SO₄), lithium oxide (Li₂O), and lithium hydroxide (LiOH), and metallic lithium. As the substance containing a lithium element (Li), lithium sulfide is preferably used from the viewpoint of obtaining a sulfide material.

As the sulfur element (S), a substance (component) containing S such as elemental S or a compound containing S can be appropriately used in combination.

Examples of the substance containing a sulfur element (S) include phosphorus sulfides such as phosphorus trisulfide (P₂S₃) and phosphorus pentasulfide (P₂S₅), other phosphorus-containing sulfur compounds, elemental sulfur, and sulfur-containing compounds. Examples of the compound containing sulfur include H₂S, CS₂, iron sulfide (FeS, Fe₂S₃, FeS₂, Fe₁₋ₓS, etc.), bismuth sulfide (Bi₂S₃), copper sulfide (CuS, Cu₂S, Cu₁₋ₓS, etc.). From the viewpoint of obtaining a sulfide material, the substance containing the sulfur element (S) is preferably phosphorus sulfide, and more preferably phosphorus pentasulfide (P₂S₅). These may be used alone or in combination of two or more. Phosphorus sulfide is considered as a compound serving as both a substance containing S and a substance containing P described later.

The sulfide solid electrolyte raw material preferably further contains a phosphorus element (P) from the viewpoint of improving the ion conductivity of the obtained sulfide solid electrolyte. As the phosphorus element (P), a substance (component) containing P such as elemental P or a compound containing P can be appropriately used in combination.

Examples of the substance containing a phosphorus element (P) include phosphorus sulfide such as phosphorus trisulfide (P₂S₃) and phosphorus pentasulfide (P₂S₅), a phosphorus compound such as sodium phosphate (Na₃PO₄), and elemental phosphorus. As the substance containing the phosphorus element (P), phosphorus sulfide having high volatility is preferable, and phosphorus pentasulfide (P₂S₅) is more preferable, from the viewpoint of further exhibiting the effect of the present invention. These may be used alone or in combination of two or more.

The sulfide solid electrolyte raw material may be obtained as a mixed raw material, for example, by appropriately mixing the above substances according to the composition of the target sulfide solid electrolyte. The mixing ratio is not particularly limited, but for example, the molar ratio S/R of the sulfur element (S) to the alkali metal element (R) in the sulfide solid electrolyte raw material is preferably 0.65/0.35 or less, and more preferably 0.5/0.5 or less from the viewpoint of improving the ion conductivity of the obtained sulfide solid electrolyte. The mixed raw material is preferably obtained by mixing at a predetermined stoichiometric ratio according to the substance used for mixing. Examples of the mixing method include mixing in a mortar, mixing using a medium such as a planetary ball mill, and media-less mixing such as a pin mill, a powder stirrer, and airflow mixing.

An example of a preferable combination of the alkali metal element and the sulfur element contained in the sulfide solid electrolyte raw material is a combination of Li₂S and P₂S₅. When Li₂S and P₂S₅ are combined, the molar ratio Li/P of Li to P is preferably 40/60 or more, and more preferably 50/50 or more. The molar ratio Li/P of Li to P is preferably 88/12 or less. The molar ratio Li/P of Li to P is preferably 40/60 to 88/12, and more preferably 50/50 to 88/12. By adjusting the mixing ratio so that P₂S₅ is relatively smaller than Li₂S, volatilization of the sulfur component and the phosphorus component during the heat treatment due to a smaller boiling point of P₂S₅ compared to a melting point of Li₂S is easily suppressed.

On the other hand, a lithium compound other than lithium sulfide, metal lithium, or the like may be used. Specifically, in this case, the sulfide solid electrolyte raw material preferably contains, as a substance containing Li, one or more selected from the group consisting of metal lithium, lithium iodide (LiI), lithium carbonate (Li₂CO₃), lithium sulfate (Li₂SO₄), lithium oxide (Li₂O), and lithium hydroxide (LiOH). These may be used alone or in combination of two or more.

The sulfide solid electrolyte raw material may contain an additional substance (compound or the like) in addition to the above substances according to the composition of the target sulfide solid electrolyte or as an additive or the like.

For example, when producing a sulfide solid electrolyte containing a halogen element such as F, Cl, Br, or I, the sulfide solid electrolyte raw material preferably contains a halogen element (Ha). In this case, the sulfide solid electrolyte raw material preferably contains a compound containing a halogen element. Examples of the compound containing a halogen element include lithium halides such as lithium fluoride (LiF), lithium chloride (LiCl), lithium bromide (LiBr), and lithium iodide (LiI), phosphorus halide, phosphoryl halide, sulfur halide, sodium halide, and boron halide. As the compound containing a halogen element, from the viewpoint of reactivity of the raw material, lithium halide is preferable, and LiCl, LiBr, and LiI are more preferable. These may be used alone or in combination of two or more.

The alkali metal halide such as lithium halide is also a compound containing an alkali metal element such as Li. When the sulfide solid electrolyte raw material contains an alkali metal halide, a part or all of alkali metal elements such as Li in the sulfide solid electrolyte raw material may be derived from an alkali metal halide such as lithium halide.

When the sulfide solid electrolyte raw material contains the halogen element (Ha) and the phosphorus element (P), the molar equivalent of Ha with respect to P in the sulfide solid electrolyte raw material is preferably 0.2 molar equivalents or more, and more preferably 0.5 molar equivalents or more, from the viewpoint of improving the ion conductivity of the obtained sulfide solid electrolyte. From the viewpoint of the stability of the obtained sulfide solid electrolyte, the molar equivalent of Ha is preferably 4 molar equivalents or less, and more preferably 3 molar equivalents or less.

The obtained sulfide solid electrolyte may be an amorphous sulfide solid electrolyte depending on the purpose, and from the viewpoint of improving the ease of formation of an amorphous phase, it is also preferable that the sulfide solid electrolyte raw material contains a sulfide such as SiS₂, B₂S₃, GeS₂, Al₂S₃. By making it easy to form an amorphous phase, an amorphous sulfide solid electrolyte can be obtained even if the cooling rate is reduced when an amorphous phase is obtained by rapid cooling, and the equipment load can be reduced.

From the viewpoint of imparting moisture resistance to the sulfide solid electrolyte, an oxide such as SiO₂, B₂O₃, GeO₂, Al₂O₃, P₂O₅ is preferably contained. These may be used alone or in combination of two or more.

### (Solid Phase Method and Melting Method)

Examples of a method for producing a sulfide solid electrolyte using lithium sulfide obtained by the method for producing lithium sulfide of one embodiment of the present invention and other sulfide solid electrolyte raw materials used as necessary include a method by a solid phase method and a method by a melting method. Hereinafter, the method by the solid phase method and the method by the melting method will be described separately.

### (Solid Phase Method)

In the solid phase method, first, the other sulfide solid electrolyte raw material is added to and mixed with lithium sulfide obtained by the method for producing lithium sulfide as necessary.

A conventionally known method can be adopted for mixing, but mixing by mechanical milling is preferable. When the mechanical milling method using a ball mill is used, examples thereof include a rotary ball mill that applies rotational motion to a container, a vibration ball mill that applies vibration motion, a planetary ball mill that applies revolution and rotational motion, a bead mill, and an attritor (registered trademark). Among them, a planetary ball mill or a bead mill having a higher mixing force or pulverizing force is preferable.

The ball mill may be dry mixing or wet mixing using a dispersion medium, but dry mixing is preferable from the viewpoint of efficiently transmitting energy.

The raw materials are mixed by the mixing to form a raw material mixture. The raw material mixture becomes a precursor of the sulfide solid electrolyte. The precursor may be a homogeneous amorphous intermediate compound that has been amorphized by employing mixing conditions that are severer than conventional ones. The amorphous intermediate compound means that an XRD peak derived from the raw material is not observed.

If desired, the method may further include a pulverization step and a heat treatment step.

In the pulverization step, either wet pulverization or dry pulverization may be used.

In the pulverization step, the average particle diameter of the sulfide solid electrolyte is preferably 1 µm to 100 µm. Here, the average particle diameter refers to a median diameter (D50), which is determined from a chart of a volume-based particle size distribution obtained by measuring a particle size distribution using a particle size distribution meter using a laser diffraction method, and means a particle diameter in which 50% by volume of particles is equal to or less than the value.

The step of heat treatment aims to enhance homogeneity and stabilize quality of the sulfide solid electrolyte.

When the obtained sulfide solid electrolyte is heat-treated, the heating temperature varies depending on the composition of the sulfide solid electrolyte, but is, for example, preferably 200°C to 600°C, more preferably 350°C to 500°C, still more preferably 380°C to 460°C, and particularly preferably 400°C to 450°C. Here, from the viewpoint of homogenization and quality stabilization of the sulfide solid electrolyte, the heating temperature is preferably 200°C or higher, more preferably 350°C or higher, still more preferably 380°C or higher, and particularly preferably 400°C or higher. From the viewpoint of preventing sintering of the particles, the temperature is preferably 600°C or lower, more preferably 500°C or lower, still more preferably 460°C or lower, and particularly preferably 450°C or lower.

When the sulfide solid electrolyte is heat-treated, the heating time varies depending on the composition of the sulfide solid electrolyte, but is, for example, preferably 10 minutes to 10 hours, more preferably 30 minutes to 9.5 hours, still more preferably 45 minutes to 9 hours, and particularly preferably 1 hour to 9 hours. Here, from the viewpoint of homogenization and quality stabilization of the sulfide solid electrolyte, the heat treatment time is preferably 10 minutes or more, more preferably 30 minutes or more, still more preferably 45 minutes or more, and particularly preferably 1 hour or more. From the viewpoint of production cost, the heat treatment time is preferably 10 hours or less, more preferably 9.5 hours or less, and still more preferably 9 hours or less.

When the sulfide solid electrolyte is heat-treated, the atmosphere other than the SO₂ concentration during the heat treatment is preferably an inert atmosphere. Examples of the inert atmosphere include a nitrogen gas atmosphere, an argon gas atmosphere, and a helium gas atmosphere.

The dew point during the heat treatment is preferably -20°C or less, and the lower limit is not particularly limited, but is usually about -80°C. The oxygen concentration is preferably 1000 ppm by volume or less.

### (Melting Method)

In the melting method, first, the sulfide solid electrolyte raw material is added to the lithium sulfide obtained by the method for producing lithium sulfide as necessary, and mixed to obtain a raw material mixture. Mixing can be performed by, for example, mixing in a mortar, mixing using media such as a planetary ball mill, or media-less mixing such as a pin mill, a powder stirrer, or airflow mixing.

Subsequently, the raw material mixture obtained above is heated to obtain a melt.

A specific method of heating and melting the raw material mixture is not particularly limited, and for example, the raw material mixture is placed in a heat-resistant container and heated in a heating furnace. The raw material mixture may be sealed in a heat-resistant container. Melting may be performed in an atmosphere containing a sulfur element or the like. Examples of the atmosphere containing a sulfur element include a mixed gas atmosphere of a gas containing a sulfur element such as sulfur gas, hydrogen sulfide gas, and sulfur dioxide gas, and an inert gas.

As the heat-resistant container, a heat-resistant container made of carbon, a heat-resistant container containing an oxide such as quartz, quartz glass, borosilicate glass, aluminosilicate glass, alumina, zirconia, or mullite, a heat-resistant container containing a nitride such as silicon nitride or boron nitride, a heat-resistant container containing a carbide such as silicon carbide, or the like may be used. The heat-resistant container may be a container in which a bulk is formed of the above-described material, or a container in which a layer of carbon, an oxide, a nitride, a carbide, or the like is formed like a carbon-coated quartz tube.

The heating temperature for heating and melting the raw material mixture varies depending on the raw materials to be used and the composition of the raw material mixture, but is, for example, preferably 550°C to 1000°C, more preferably 600°C to 950°C, still more preferably 630°C to 900°C, and particularly preferably 650°C to 800°C. Here, the heating temperature is preferably 550°C or higher, more preferably 600°C or higher, still more preferably 630°C or higher, and particularly preferably 650°C or higher from the viewpoint of enhancing the meltability of the raw materials and homogenizing the melt in a short time. The heating temperature is preferably 1000°C or lower, more preferably 950°C or lower, still more preferably 900°C or lower, and particularly preferably 800°C or lower from the viewpoint of suppressing deterioration due to heating of the components, suppressing composition deviation due to volatilization of the components, and suppressing decomposition.

The heating and melting time varies depending on the scale, but is preferably 10 minutes to 10 hours, more preferably 30 minutes to 9.5 hours, still more preferably 45 minutes to 9 hours, and particularly preferably 1 hour to 9 hours. Here, from the viewpoint of favorably proceeding the reaction, the heating and melting time is preferably 10 minutes or more, more preferably 30 minutes or more, still more preferably 45 minutes or more, and particularly preferably 1 hour or more. From the viewpoint of productivity, the heating and melting time is preferably 10 hours or less, more preferably 9.5 hours or less, and still more preferably 9 hours or less.

The pressure during heating and melting is not particularly limited, but for example, normal pressure or slight pressurization is preferable, and normal pressure is more preferable.

The dew point during heating and melting is preferably -20°C or less, and the lower limit is not particularly limited, but is usually about -80°C. The oxygen concentration is preferably 1000 ppm by volume or less.

The complete dissolution of the melt can be confirmed by the absence of a peak derived from the crystal in the high-temperature X-ray diffraction measurement.

Subsequently, the obtained melt is cooled to precipitate a crystal. The crystal obtained by the precipitation becomes a sulfide solid electrolyte.

The cooling may be performed by a known method, and the method is not particularly limited. More specific examples of the cooling method include a method in which a molten material is poured onto a plate-shaped body made of carbon or the like and cooled; a method in which a molten material is poured into a narrow gap and thinly formed, such as a twin roll method; and a gas atomization method.

The cooling rate is preferably 0.1°C/sec to 10000°C/sec, more preferably 0.5°C/sec to 5000°C/sec, and still more preferably 1°C/sec to 1000°C/sec. Here, from the viewpoint of increasing composition homogeneity and suppressing variation in quality, the cooling rate is preferably 0.1°C/sec or more, more preferably 0.5°C/sec or more, and still more preferably 1°C/sec or more. The upper limit of the cooling rate is not particularly limited, but in consideration of the cooling rate of the twin roller, which is generally said to have the highest rapid cooling rate, the upper limit is 10 ⁷°C/sec or less, and from the viewpoint of actual production, the cooling rate is more preferably 10000°C/sec or less, still more preferably 5000°C/sec or less, and still more preferably 1000°C/sec.

The atmosphere during cooling is preferably a low moisture content and an inert atmosphere as in the case of heating and melting.

If desired, the method may further include a pulverization step and a heat treatment step.

In this case, each of the pulverization step and the heat treatment step is the same as the pulverization step and the heat treatment step in the solid phase method, and preferred embodiments thereof are also the same. When an atomizing method capable of simultaneously cooling and powdering is adopted as the cooling method, the atomizing method also serves as the pulverizing step.

### (Sulfide Solid Electrolyte)

The crystal structure of the sulfide solid electrolyte obtained by the method for producing a sulfide solid electrolyte of one embodiment of the present invention (hereinafter, also simply referred to as a sulfide solid electrolyte) is not particularly limited. Examples thereof include powders of a sulfide solid electrolyte having a crystal structure containing a Li element, a P element, and a S element, which is referred to as an LPS type, such as Li₇P₃S₁₁; a sulfide solid electrolyte having a crystal structure containing a Li element, a Ge element, a P element, and a S element, which is referred to as a LGPS type, such as Li₁₀GeP₂S₁₂; a sulfide solid electrolyte having an argyrodite crystal structure containing a Li element, a P element, a S element, and a Ha element; a sulfide solid electrolyte made of Li-P-S-Ha type crystallized glass; and a sulfide solid electrolyte having another crystal structure.

The sulfide solid electrolyte may include a crystalline phase and an amorphous phase.

Among the above, the argyrodite crystal structure is a crystal structure of a compound group derived from a mineral represented by a composition formula Ag₈GeS₆. The sulfide solid electrolyte is not limited to the above crystal structure, and some elements may be substituted with other elements.

When the sulfide solid electrolyte has an argyrodite crystal structure, it more preferably contains at least one element selected from the group consisting of Cl, Br, and I as the Ha element, and still more preferably contains two or more elements.

The sulfide solid electrolyte further preferably contains at least one of Cl and Br as the Ha element, and further preferably contains Cl and Br.

The argyrodite crystal structure preferably has the above-described structure, and the composition formula is preferably represented by Li_{α}PS_{β}Ha_{γ} and satisfies the relationships of 5 ≤ α ≤ 7, 4 ≤ β ≤ 6, and 1.3 ≤ γ ≤ 2. The element ratio more preferably satisfies the relationships of 5.1 < α < 6.3, 4 < β < 5.3, and 1.4 ≤ γ ≤ 1.9, and even more preferably satisfies the relationships of 5.2 < α < 6.2, 4.1 < β < 5.2, and 1.5 ≤ γ ≤ 11.8.

That is, α is preferably 5 or more, more preferably more than 5.1, further preferably more than 5.2, and preferably 7 or less, more preferably less than 6.3, further preferably less than 6.2. β is preferably 4 or more, more preferably more than 4, further preferably more than 4.1, and preferably 6 or less, more preferably less than 5.3, further preferably less than 5.2. γ is preferably 1.3 or more, more preferably 1.4 or more, and even more preferably 1.5 or more, and is preferably 2 or less, more preferably 1.9 or less, and even more preferably 1.8 or less.

In the argyrodite crystal structure, a part of the S element may be substituted with an Ha element, an O element, Se, Te, BH₄, CN, or the like. A part of the P element may be substituted with a Si element, an Al element, a Sn element, an In element, a Cu element, a Sb element, a Ge element, or the like.

### <<Method for Producing Sulfide Solid Electrolyte Raw Material Containing Lithium>>

A method for producing a sulfide solid electrolyte raw material containing lithium according to an embodiment of the present invention (hereinafter, also simply referred to as a method for producing a sulfide solid electrolyte raw material containing lithium) includes: reacting lithium carbonate and calcium hydroxide in a liquid to obtain a solution containing lithium hydroxide; subjecting the solution to solid-liquid separation into a liquid component containing the lithium hydroxide and a solid component containing lithium derived from the lithium carbonate; and removing calcium in the solid component to obtain a sulfide solid electrolyte raw material containing lithium from the solid component.

FIG. 2A shows an example of a flowchart of a method for producing a sulfide solid electrolyte raw material containing lithium. In the method for producing a sulfide solid electrolyte raw material containing lithium, first, lithium carbonate and calcium hydroxide are reacted in a liquid to obtain a solution containing lithium hydroxide (step S21). Subsequently, the obtained solution is subjected to solid-liquid separation into a liquid component containing lithium hydroxide and a solid component containing lithium derived from lithium carbonate (step S22). Then, calcium in the obtained solid component is removed (step S23). Thus, a sulfide solid electrolyte raw material containing lithium is obtained from the solid component (step S24). Steps S21 to S24 are preferably performed continuously, and the effect of the present invention is further enhanced when this continuous manufacturing method is employed.

Hereinafter, a method for producing a sulfide solid electrolyte raw material containing lithium will be described in detail for each of the above steps.

Step S21 and step S22 are the same as step S11 and step S12, respectively, in the method for producing lithium hydroxide according to the embodiment of the present invention described above.

The recovery rate of lithium as the sulfide solid electrolyte containing lithium, in other words, the ratio of lithium contained in the solid component after solid-liquid separation to the entire lithium derived from lithium carbonate as a raw material is preferably 10% to 80% on a mass basis. When the ratio of lithium is 10% or more, lithium derived from lithium carbonate as a raw material can sufficiently remain on the solid component side, and when the ratio is 80% or less, a sufficient amount of lithium hydroxide can be obtained on the liquid component side. The ratio of lithium is more preferably 15% or more, and even more preferably 20% or more, and is more preferably 70% or less, and even more preferably 60% or less.

In step S23, first, calcium in the solid component obtained through steps S21 and S22 is changed to a sparingly soluble calcium compound. Examples of calcium in the solid component include calcium carbonate and calcium hydroxide. The method for converting calcium in the solid component into a sparingly soluble calcium compound is not particularly limited, and examples thereof include a method of adding sulfate ions to the solid component, a method of adding phosphate ions, and a method of adding fluorine ions. Among them, a method of adding sulfate ions to the solid component is preferable from the viewpoint that the concentration of calcium can be removed to a lower concentration. By adding sulfate ions to the solid component, calcium in the solid component becomes calcium sulfate, which is removed as calcium sulfate by solid-liquid separation or the like performed later.

Examples of the method of adding sulfate ions to the solid component include a method of adding water or the like to the solid component to form a slurry and then adding sulfuric acid to the slurry. The chemical reaction formula in this case is as follows.

CaCO₃+H₂SO₄+H₂O→CaSO₄·2H₂O+CO₂

Ca(OH)₂+H₂SO₄→CaSO₄·2H₂O

The addition amount of sulfuric acid is, for example, preferably 1.00 times or more, more preferably 1.01 times or more, and even more preferably 1.02 times or more, and preferably 1.30 times or less, more preferably 1.20 times or less, and even more preferably 1.10 times or less on a molar basis, based on the amount of calcium contained in the solid.

By adding sulfuric acid more than the calcium content in terms of mol, the solubility of CaSO₄·2H₂O can be reduced, and the amount of calcium contained in the slurry can be further reduced.

In subsequent step S24, a sulfide solid electrolyte raw material containing lithium is obtained from the solid component to which sulfate ions are added in step S23.

The sulfide solid electrolyte raw material containing lithium to be obtained is preferably lithium halide or lithium sulfate. Specifically, examples include a method of reacting a solid component with hydrogen halide to obtain lithium halide as a sulfide solid electrolyte raw material as shown in step S24a of FIG. 2B, or a method of reacting a solid component with sulfuric acid to obtain lithium sulfate as a sulfide solid electrolyte raw material as shown in step S24b of FIG. 2C.

In step S24a of FIG. 2B, as a method of reacting the solid component and the hydrogen halide to obtain the lithium halide, for example, a method of adding hydrohalic acid to the solid component or a solution containing the solid component may be mentioned. Since the solid component contains lithium carbonate (Li₂CO₃) as a raw material or lithium hydroxide (LiOH), the chemical reaction formula in the case of using, for example, hydrobromic acid as the hydrohalic acid is as follows.

Li₂CO₃+2HBr→2LiBr+H₂O+CO₂

LiOH+HBr→LiBr+H₂O

The amount of hydrogen halide added is, for example, preferably 0.9 times or more, more preferably 1.0 times or more, and preferably 2.0 times or less, more preferably 1.5 times or less on a molar basis, based on the amount of lithium contained in the solid.

When the hydrohalic acid is added in an amount equal to or more than the amount required for the reaction with lithium, the reaction rate can be accelerated, while an excessive hydrohalic acid finally remains. Therefore, it is preferable to adjust the composition of lithium halide by removing excess hydrogen halide when drying by heating or by adding lithium carbonate or lithium hydroxide before drying.

By adding hydrohalic acid while stirring, the reaction between lithium carbonate and hydrohalic acid can be promoted, and the reaction between unreacted sulfate ions and calcium can also be promoted.

When calcium in the solid component is removed by the method of adding at least one of sulfate ions, phosphate ions, and fluorine ions to the solid component in step S23, the lithium halide obtained through the subsequent steps contains at least one of sulfate ions, phosphate ions, and fluorine ions. That is, as an aspect of the lithium halide obtained by the above production method, a lithium halide-containing composition for synthesizing a sulfide solid electrolyte, which contains lithium halide and at least one of sulfate ions, phosphate ions, and fluorine ions, is exemplified. When the composition contains at least one of sulfate ions, phosphate ions, and fluorine ions, the lithium ion conductivity of the sulfide solid electrolyte obtained using the composition can be improved, and the effect of suppressing the generation of H₂S can be obtained.

In the composition, the concentration of at least one of sulfate ions, phosphate ions, and fluorine ions is preferably 10 mass% or less. When the concentration of the ions is 10 mass% or less, the influence on the content of other components can be reduced. The concentration of the ions is preferably 10 mass% or less, more preferably 5 mass% or less, and still more preferably 1 mass% or less. The content is usually 0.1 mass% or more.

On the other hand, as a method of obtaining lithium sulfate as a sulfide solid electrolyte raw material by reacting a solid component with sulfate ions in step S24b of FIG. 2C, for example, a method of adding sulfuric acid to a solid component or a solution containing a solid component is exemplified. The chemical reaction formula in this case is as follows.

Li₂CO₃+H₂SO₄+H₂O→Li₂SO₄·2H₂O+CO₂

2LiOH+H₂SO₄→Li₂SO₄+2H₂O

The addition amount of sulfuric acid is, for example, preferably 0.50 times or more, more preferably 0.60 times or more, further preferably 0.70 times or more, and preferably 2.0 times or less, more preferably 1.50 times or less, further preferably 1.00 times or less on a molar basis, based on the amount of lithium contained in the solid.

When sulfuric acid is added in an amount equal to or more than the amount required for the reaction with lithium, the reaction rate can be accelerated, while excessive sulfuric acid finally remains. Therefore, after that, it is preferable to adjust the lithium sulfate composition by adding lithium carbonate and lithium hydroxide to adjust the composition.

By adding sulfuric acid while stirring, the reaction between lithium carbonate and sulfuric acid can be promoted, and the reaction between unreacted sulfate ions and calcium can also be promoted.

As described above, the sulfide solid electrolyte raw material containing lithium is obtained. Examples of the sulfide solid electrolyte raw material containing lithium to be obtained include the same as the "substance containing a lithium element (Li)" described as one of the sulfide solid electrolyte raw materials in the section of the first production method of the sulfide solid electrolyte.

### «Second Production Method of Sulfide Solid Electrolyte»

A method for producing a sulfide solid electrolyte according to an embodiment of the present invention (hereinafter, also simply referred to as a second method for producing a sulfide solid electrolyte) is characterized in that a sulfide solid electrolyte is produced using a lithium-containing sulfide solid electrolyte raw material obtained by the method for producing a lithium-containing sulfide solid electrolyte raw material according to an embodiment of the present invention.

In addition to the sulfide solid electrolyte raw material containing lithium, another sulfide solid electrolyte raw material may be used to produce the sulfide solid electrolyte. The types of other sulfide solid electrolyte raw materials, the solid phase method, and the melting method are the same as those described in the section of the first production method of the sulfide solid electrolyte.

### «Method for Producing Lithium Hydroxide and Sulfide Solid Electrolyte Raw Material Containing Lithium»

A method for producing a lithium hydroxide and a sulfide solid electrolyte raw material containing lithium according to an embodiment of the present invention (hereinafter, also simply referred to as a method for producing a lithium hydroxide and a sulfide solid electrolyte raw material containing lithium) includes: reacting lithium carbonate and calcium hydroxide in a liquid to obtain a solution containing lithium hydroxide; subjecting the solution to solid-liquid separation into a liquid component containing the lithium hydroxide and a solid component containing lithium derived from the lithium carbonate; recovering the lithium hydroxide from the liquid component; and removing calcium in the solid component to obtain a sulfide solid electrolyte raw material containing lithium from the solid component.

That is, the method for producing a lithium hydroxide and a sulfide solid electrolyte raw material containing lithium according to an embodiment of the present invention is an embodiment in which the method for producing lithium hydroxide according to an embodiment of the present invention described above and the sulfide solid electrolyte raw material containing lithium according to an embodiment of the present invention are combined. In other words, this is an embodiment in which lithium carbonate and calcium hydroxide are reacted in a liquid to obtain a solution containing lithium hydroxide, the solution is subjected to solid-liquid separation into a liquid component containing lithium hydroxide and a solid component containing lithium derived from lithium carbonate, lithium hydroxide is recovered from the liquid component side, and a sulfide solid electrolyte raw material containing lithium is obtained from the solid component side.

According to the method for producing a lithium hydroxide and a sulfide solid electrolyte raw material containing lithium of an embodiment of the present invention, lithium hydroxide is obtained from the liquid component side, and a sulfide solid electrolyte raw material containing lithium is obtained from the solid component side, so that a plurality of types of raw materials for a sulfide solid electrolyte can be efficiently obtained.

FIG. 3A shows an example of a flowchart of a method for producing lithium hydroxide and a sulfide solid electrolyte raw material containing lithium. In the method for producing lithium hydroxide and a sulfide solid electrolyte raw material containing lithium, first, lithium carbonate and calcium hydroxide are reacted in a liquid to obtain a solution containing lithium hydroxide (step S31). Subsequently, the obtained solution is subjected to solid-liquid separation into a liquid component containing lithium hydroxide and a solid component containing lithium derived from lithium carbonate (step S32). Lithium hydroxide is recovered from the liquid component (step S33a), and calcium in the solid component is removed from the solid component to obtain a sulfide solid electrolyte raw material containing lithium from the solid component (step S33b). Steps S31 to S33a and/or steps S31 to S33b are preferably performed continuously, and the effect of the present invention is further enhanced when this continuous manufacturing method is employed.

Step S31, step S32, and step S33a are the same as step S11, step S12, and step S13, respectively, in the method for producing lithium hydroxide according to the embodiment of the present invention described above. Step S33b is the same as a combination of step S23 and step S24 in the method for producing a sulfide solid electrolyte raw material containing lithium of one embodiment of the present invention described above.

The total lithium recovery rate, in other words, the total ratio of lithium contained in the liquid component and the solid component after solid-liquid separation to the entire lithium derived from lithium carbonate as a raw material is preferably 90% to 99% on a mass basis. When the total lithium recovery rate is 90% or more, lithium derived from lithium carbonate as a raw material can be effectively recovered, and when the total lithium recovery rate is 99% or less, when calcium sulfate is removed by solid-liquid separation, it is not necessary to increase the cost for recovering lithium contained on the calcium sulfate side. The total lithium recovery rate is more preferably 92% or more, even more preferably 94% or more, and is more preferably 98% or less, even more preferably 97% or less.

### «Third Production Method of Sulfide Solid Electrolyte»

A method for producing a sulfide solid electrolyte of one embodiment of the present invention (hereinafter, also simply referred to as a third method for producing a sulfide solid electrolyte) is characterized in that a sulfide solid electrolyte is produced using, as raw materials, lithium sulfide obtained by reacting lithium hydroxide obtained by the method for producing lithium hydroxide and a sulfide solid electrolyte raw material containing lithium of one embodiment of the present invention with hydrogen sulfide, and a sulfide solid electrolyte raw material containing lithium obtained by the method for producing lithium hydroxide and a sulfide solid electrolyte raw material containing lithium of one embodiment of the present invention.

FIG. 3B shows a flowchart of a third method for producing a sulfide solid electrolyte. In the third method for producing a sulfide solid electrolyte, a sulfide solid electrolyte is produced using the lithium hydroxide obtained through steps S31 to S33a and the sulfide solid electrolyte raw material containing lithium obtained through steps S31 to S33b (step S34). Steps S31 to S34 are preferably performed continuously, and the effect of the present invention is further enhanced when this continuous manufacturing method is employed.

The method for obtaining lithium sulfide by reacting lithium hydroxide with hydrogen sulfide is the same as described in the section of the method for producing lithium sulfide of one embodiment of the present invention.

In addition to lithium sulfide or the sulfide solid electrolyte raw material containing lithium, other sulfide solid electrolyte raw materials may be used to produce a sulfide solid electrolyte. The types of other sulfide solid electrolyte raw materials, the solid phase method, and the melting method are the same as those described in the section of the first production method of the sulfide solid electrolyte.

According to the third method for producing a sulfide solid electrolyte, lithium sulfide is obtained using lithium hydroxide obtained from the liquid component side as a raw material, a sulfide solid electrolyte raw material containing lithium is obtained from the solid component side, and a sulfide solid electrolyte can be produced using the plurality of kinds of sulfide solid electrolyte raw materials, so that the sulfide solid electrolyte can be efficiently produced.

The present invention is not limited to the above-described embodiments, and various modifications can be adopted within the scope of the present invention. For example, the invention is not limited to the above-described embodiments, and modifications, improvements, and the like can be made as appropriate. In addition, materials, shapes, dimensions, numbers, arrangement positions, and the like of the components in the above-described embodiments are arbitrary and are not limited as long as the present invention can be achieved.

As described above, the following matters are disclosed in the present specification.
[1] A method for producing lithium hydroxide, including:
   reacting lithium carbonate with calcium hydroxide in a liquid to obtain a solution containing lithium hydroxide;
   subjecting the solution to solid-liquid separation into a liquid component containing the lithium hydroxide and a solid component containing lithium derived from the lithium carbonate; and
   recovering the lithium hydroxide from the liquid component.
[2] The method for producing lithium hydroxide according to [1], in which an amount of water with respect to a total liquid in which the lithium carbonate and the calcium hydroxide are reacted is 70 mass% to 96 mass%.
[3] The method for producing lithium hydroxide according to [1] or [2], in which a blending ratio of the calcium hydroxide to the lithium carbonate (calcium hydroxide/lithium carbonate) is 0.2 to 1.1 on a molar basis.
[4] The method for producing lithium hydroxide according to any one of [1] to [3], in which a temperature of the liquid when the lithium carbonate and the calcium hydroxide are reacted is 10°C to 95°C.
[5] A method for producing lithium sulfide, including reacting the lithium hydroxide obtained by the production method according to any one of [1] to [4] with hydrogen sulfide to produce lithium sulfide.
[6] A method for producing a sulfide solid electrolyte, in which the lithium sulfide obtained by the production method according to [5] is used as a raw material.
[7] A method for producing a sulfide solid electrolyte raw material containing lithium, including:
   reacting lithium carbonate with calcium hydroxide in a liquid to obtain a solution containing lithium hydroxide;
   subjecting the solution to solid-liquid separation into a liquid component containing the lithium hydroxide and a solid component containing lithium derived from the lithium carbonate; and
   removing calcium in the solid component to obtain a sulfide solid electrolyte raw material containing lithium from the solid component.
[8] The method for producing a sulfide solid electrolyte raw material containing lithium according to [7], in which the calcium in the solid component is removed by adding sulfate ions to the solid component.
[9] The method for producing a sulfide solid electrolyte raw material containing lithium according to [7] or [8], in which the sulfide solid electrolyte raw material containing lithium is a lithium halide or lithium sulfate.
[10] A method for producing a sulfide solid electrolyte, including using the sulfide solid electrolyte raw material containing lithium obtained by the production method according to any one of [7] to [9].
[11] A method for producing lithium hydroxide and a sulfide solid electrolyte raw material containing lithium, including:
   reacting lithium carbonate with calcium hydroxide in a liquid to obtain a solution containing lithium hydroxide;
   subjecting the solution to solid-liquid separation into a liquid component containing the lithium hydroxide and a solid component containing lithium derived from the lithium carbonate;
   recovering the lithium hydroxide from the liquid component; and
   removing calcium in the solid component to obtain a sulfide solid electrolyte raw material containing lithium from the solid component.
[12] A method for producing a sulfide solid electrolyte, in which lithium sulfide obtained by reacting the lithium hydroxide obtained by the production method according to claim 11 with hydrogen sulfide and the sulfide solid electrolyte raw material containing lithium obtained by the production method according to [11] are used as raw materials.
[13] A lithium hydroxide-containing composition for synthesizing a sulfide solid electrolyte, containing lithium hydroxide and zinc.
[14] The lithium hydroxide-containing composition for synthesizing a sulfide solid electrolyte according to [13], further containing aluminum.
[15] The lithium hydroxide-containing composition for synthesizing a sulfide solid electrolyte according to [14], in which a sum of a zinc concentration and an aluminum concentration is 10 ppm by mass or more.
[16] The lithium hydroxide-containing composition for synthesizing a sulfide solid electrolyte according to any one of [13] to [15], further containing 10 ppm by mass or more of calcium.
[17] A lithium sulfide-containing composition for synthesizing a sulfide solid electrolyte, containing lithium sulfide and zinc.
[18] The lithium sulfide-containing composition for synthesizing a sulfide solid electrolyte according to [17], further containing aluminum.
[19] The lithium sulfide-containing composition for synthesizing a sulfide solid electrolyte according to [18], in which a sum of a zinc concentration and an aluminum concentration is 10 ppm by mass or more.
[20] The lithium sulfide-containing composition for synthesizing a sulfide solid electrolyte according to any one of [17] to [19], further containing 10 ppm by mass or more of calcium.
[21] A lithium halide-containing composition for synthesizing a sulfide solid electrolyte, containing a lithium halide and at least one of sulfate ions, phosphate ions, and fluorine ions, in which a concentration of the ions is 10 mass% or less.

### EXAMPLES

Hereinafter, the present invention will be specifically described with reference to Examples, but the present invention is not limited thereto. Examples 1 to 8 are inventive examples, and Example 9 is a comparative example.

### (Example 1)

### <Preparation of Lithium Hydroxide>

First, 50.0 g of lithium carbonate (manufactured by Kanto Chemical Co., Inc.) was added to 300 g of distilled water to prepare a slurry of lithium carbonate. Subsequently, 50.1 g of calcium hydroxide (manufactured by Kanto Chemical Co., Inc.) was added to the slurry of lithium carbonate, and the mixture was stirred at 85°C for 8 hours using a magnetic stirrer to react lithium carbonate with calcium hydroxide in a liquid. The mixing ratio of lithium carbonate to calcium hydroxide (calcium hydroxide/lithium carbonate) was 1.0. The amount of water with respect to the total liquid in which lithium carbonate and calcium hydroxide were reacted was 75.0 mass%, and the amount of water with respect to Li₂CO₃ was 6.0 mass%.

Thereafter, solid-liquid separation was performed by a method of filtration under reduced pressure to separate into a liquid component in which lithium hydroxide was dissolved and a solid component. Then, the temperature of the liquid component in which lithium hydroxide was dissolved was gradually increased at 2 kPa using a reduced-pressure drying furnace, and the liquid component was dried under reduced pressure at a maximum temperature of 85°C to concentrate the liquid in which lithium hydroxide was dissolved (with a step of removing water: indicated by "A" in Table 2). In a state where lithium hydroxide was concentrated to 7.6 mass%, solid-liquid separation was performed to remove calcium. The recovered liquid was dried under reduced pressure to obtain a lithium hydroxide powder.

### <Preparation of Lithium Sulfide>

The obtained lithium hydroxide powder was placed in a vibration drying furnace (product name: VH type, manufactured by Chuo Kakohki Co., Ltd.), hydrogen sulfide gas was introduced while stirring under the conditions of a temperature of 200°C and a pressure of 2 kPa, and lithium hydroxide and hydrogen sulfide were reacted to obtain a lithium sulfide powder.

### <Preparation of Lithium Halide>

To the solid component recovered at the time of preparing lithium hydroxide, 300 g of distilled water was added to form a slurry, and then 260 g of 3 mol/L sulfuric acid (manufactured by Junsei Chemical Co., Ltd.) was added to obtain calcium sulfate from the calcium component. Next, 48 wt% of hydrobromic acid (manufactured by Kanto Chemical Co., Inc.) as hydrohalic acid was added to prepare an aqueous lithium bromide solution containing calcium sulfate. The obtained lithium bromide aqueous solution containing calcium sulfate was subjected to solid-liquid separation by a method of filtration under reduced pressure to remove calcium sulfate, thereby obtaining a lithium bromide solution. The obtained lithium bromide solution was dried and solidified under conditions of a temperature of 160°C and a pressure of 2 kPa using a vibration dryer (product name: VH type, manufactured by Chuo Koki Co., Ltd.) to obtain a lithium bromide powder.

### <Preparation of Sulfide Solid Electrolyte>

The lithium sulfide powder and the lithium bromide powder obtained above were used as a sulfide solid electrolyte raw material to prepare a sulfide solid electrolyte. First, the lithium sulfide powder and the lithium bromide powder obtained above, a phosphorus pentasulfide powder (manufactured by Sigma Co., Ltd., purity 99%), and a lithium chloride powder (manufactured by Sigma Co., Ltd., purity 99.99%) were weighed in a dry nitrogen atmosphere so as to have a composition ratio of Li_{5.3}PS_{4.2}Cl_{0.8}Br_{0.8}, thereby obtaining a raw material mixture.

Next, the obtained raw material mixture was placed in a heat-resistant container and heated and melted under conditions of a pressure of 1 atm and a temperature of 750°C for 0.5 hours. At this time, a sulfur gas obtained by heating elemental sulfur at a temperature of 350°C was supplied so that the partial pressure of the sulfur gas became 0.1 atm while accompanied by N ₂ as a carrier gas, thereby obtaining a gas atmosphere containing a sulfur element, and sulfur was introduced into the melt by performing heating and melting under this gas atmosphere. The content of the sulfur gas in the gas atmosphere containing a sulfur element was 0.1 vol%.

Thereafter, the mixture was cooled at a cooling rate of 1°C/sec to 1000°C/sec to obtain a solid as a sulfide solid electrolyte containing an amorphous phase and an argyrodite crystal phase. Next, the solid was crystallized at 450°C for 1 hour in a nitrogen gas atmosphere to obtain a sulfide solid electrolyte composite containing a sulfide solid electrolyte containing argyrodite crystals.

### (Example 2)

Lithium hydroxide, lithium bromide, and a sulfide solid electrolyte in Example 2 were produced in the same manner as in Example 1 except that the amount of distilled water to which lithium carbonate was added was changed from 300 g to 600 g in the production of lithium hydroxide in Example 1. The amount of water with respect to the total liquid in which lithium carbonate and calcium hydroxide were reacted was 85.7 mass%, and the amount of water with respect to Li₂CO₃ was 12.0 mass%.

### (Example 3)

Lithium hydroxide, lithium bromide, and a sulfide solid electrolyte in Example 3 were produced in the same manner as in Example 1 except that the amount of distilled water to which lithium carbonate was added was changed from 300 g to 900 g in the production of lithium hydroxide in Example 1. The amount of water with respect to the total liquid in which lithium carbonate and calcium hydroxide were reacted was 90.0 mass%, and the amount of water with respect to Li₂CO₃ was 18.0 mass%.

### (Example 4)

Lithium hydroxide, lithium bromide, and a sulfide solid electrolyte in Example 4 were produced in the same manner as in Example 1 except that the amount of distilled water to which lithium carbonate was added was changed from 300 g to 1200 g in the production of lithium hydroxide in Example 1. The amount of water with respect to the total liquid in which lithium carbonate and calcium hydroxide were reacted was 92.3 mass%, and the amount of water with respect to Li₂CO₃ was 24.0 mass%.

### (Example 5)

Lithium hydroxide, lithium bromide, and a sulfide solid electrolyte in Example 5 were produced in the same manner as in Example 1 except that the amount of distilled water to which lithium carbonate was added was changed from 300 g to 1200 g, and the time for stirring the slurry of lithium carbonate and calcium hydroxide was changed from 8 hours to 24 hours in the production of lithium hydroxide in Example 1.

### (Example 6)

Lithium hydroxide, lithium bromide, and a sulfide solid electrolyte in Example 6 were produced in the same manner as in Example 1 except that the amount of distilled water to which lithium carbonate was added was changed from 300 g to 600 g, and the temperature (reaction temperature) when the slurry of lithium carbonate and calcium hydroxide were stirred was set to 25°C in the production of lithium hydroxide in Example 1.

### (Example 7)

A lithium hydroxide, a lithium bromide, and a sulfide solid electrolyte in Example 7 were produced in the same manner as in Example 1 except that, in the production of the lithium hydroxide in Example 1, the amount of distilled water to which lithium carbonate was added was changed from 300 g to 600 g, the blending ratio of calcium hydroxide to lithium carbonate (calcium hydroxide/lithium carbonate) was set to 0.6, and the amounts of sulfuric acid and hydrogen bromide added in the synthesis of lithium bromide were set to 0.6 times the amounts of sulfuric acid and hydrogen bromide added in Example 1.

### (Example 8)

A lithium hydroxide, a lithium bromide, and a sulfide solid electrolyte in Example 8 were produced in the same manner as in Example 1 except that, in the production of the lithium hydroxide in Example 1, the amount of distilled water to which lithium carbonate was added was changed from 300 g to 600 g, the blending ratio of calcium hydroxide to lithium carbonate (calcium hydroxide/lithium carbonate) was set to 0.3, and the amounts of sulfuric acid and hydrogen bromide added in the synthesis of lithium bromide were set to 0.3 times the amounts of sulfuric acid and hydrogen bromide added in Example 1.

### (Example 9)

The preparation of lithium hydroxide and lithium bromide in Example 9 was attempted in the same manner as in Example 1 except that the amount of distilled water to which lithium carbonate was added was changed from 300 g to 3600 g in the preparation of lithium hydroxide in Example 1. However, although the step of removing water in the liquid component in which lithium hydroxide was dissolved was attempted, water could not be removed over 100 hours, and lithium hydroxide could not be recovered from the liquid component (step of removing water: indicated by "B" in Table 2). In addition, lithium derived from lithium carbonate as a raw material was not contained in the solid component, and lithium bromide could not be obtained from the solid component. The amount of water with respect to the total liquid in which lithium carbonate and calcium hydroxide were reacted was 97.3 mass%, and the amount of water with respect to Li₂CO₃ was 72.0 mass%.

### <Li Recovery Rate as Lithium Hydroxide>

First, 0.1 g of each lithium hydroxide powder obtained above was collected and dissolved in dilute nitric acid, and the lithium concentration in the powder was determined using an atomic absorption spectrometer. The amount of lithium element was calculated from the lithium concentration in the obtained powder and the weight of the powder, and the ratio (%) of the amount of lithium contained in the lithium hydroxide powder to the amount of lithium derived from the used lithium carbonate was defined as the Li recovery rate as lithium hydroxide. The results are shown in Table 1.

### <Li Recovery Rate as Lithium Halide>

First, 0.1 g of each lithium halide powder obtained above was collected and dissolved in dilute nitric acid, and the lithium concentration in the powder was determined using an atomic absorption spectrometer. The amount of lithium element was calculated from the lithium concentration in the obtained powder and the weight of the powder, and the ratio (%) of the amount of lithium contained in the lithium halide powder to the amount of lithium derived from the used lithium carbonate was defined as the Li recovery rate as lithium halide. The results are shown in Table 1.

### <Total Li Recovery Rate>

Total Li recovery rate = (Li recovery rate as lithium hydroxide) + (Li recovery rate as lithium halide). The results are shown in Table 1.

### <Concentration of Ca, Al, and Zn in Lithium Hydroxide>

A sample of 0.1 g of the obtained lithium hydroxide powder was collected and dissolved in dilute nitric acid, and the concentration thereof was calculated using ICP (highfrequency inductively coupled plasma) emission spectroscopy. The results are shown in Table 2.

### <SO ₄ Concentration in Lithium Halide>

A sample of 0.1 g of the obtained lithium halide powder was collected and subjected to ion chromatography with ultrapure water. The results are shown in Table 2.

### <Lithium Ion Conductivity>

The sulfide solid electrolyte obtained in each example was further crushed in a mortar and subjected to a mesh pass of 100 µm to obtain a sulfide solid electrolyte powder having D50 of a volume-based particle size distribution of 10 µm, the powder was formed into powder compact as a measurement sample at a pressure of 380 MPa, the lithium ion conductivity was measured using an AC impedance measurement device (potentiostat/galvanostat VSP, manufactured by Bio-Logic Sciences Instruments), and a sample having a lithium ion conductivity of 5 mS/or more was evaluated as "A".

The measurement conditions were a measurement frequency of 100 Hz to 1 MHz, a measurement voltage of 100 mV, and a measurement temperature of 25 °C.

**[Table 1]**

| | Li₂CO₃ | Ca(OH)₂ | Ca(OH)₂/ Li₂CO₃ | Distilled water | Amount of distilled water to total liquid | Amount of distilled water to Li₂CO₃ | Reaction temperature | Reaction time | Recovery rate as lithium hydroxide | Recovery rate as lithium halide | Total Li recovery rate |
|---|---|---|---|---|---|---|---|---|---|---|---|
| | 9 | 9 | molar ratio | 9 | mass% | mass% | °C | hour | % | % | % |
| Example 1 | 50.0 | 50.1 | 1.0 | 300 | 75.0 | 6.0 | 85 | 8 | 30 | 65 | 95 |
| Example 2 | 50.0 | 50.1 | 1.0 | 600 | 85.7 | 12.0 | 85 | 8 | 50 | 45 | 95 |
| Example 3 | 50.0 | 50.1 | 1.0 | 900 | 90.0 | 18.0 | 85 | 8 | 70 | 25 | 95 |
| Example 4 | 50.0 | 50.1 | 1.0 | 1200 | 92.3 | 24.0 | 85 | 8 | 85 | 10 | 95 |
| Example 5 | 50.0 | 50.1 | 1.0 | 1200 | 92.3 | 24.0 | 85 | 24 | 90 | 5 | 95 |
| Example 6 | 50.0 | 50.1 | 1.0 | 600 | 85.7 | 12.0 | 25 | 8 | 25 | 70 | 95 |
| Example 7 | 50.0 | 30.1 | 0.6 | 600 | 85.7 | 12.0 | 85 | 8 | 45 | 50 | 95 |
| Example 8 | 50.0 | 15.0 | 0.3 | 600 | 85.7 | 12.0 | 85 | 8 | 25 | 70 | 95 |
| Example 9 | 50.0 | 50.1 | 1.0 | 3600 | 97.3 | 72.0 | 85 | 8 | 0 | 0 | 0 |

**[Table 2]**

| | Step of removing water | Ca concentration in lithium hydroxide | Al concentration in lithium hydroxide | Zn concentration in lithium hydroxide | SO₄ ion concentration in lithium halide | Conductivity of synthesized electrolyte |
|---|---|---|---|---|---|---|
| | - | ppm by mass | ppm by mass | ppm by mass | wt% | - |
| Example 1 | A | 120 | 3 | 18 | 0.2 | A |
| Example 2 | A | 100 | <3 | 25 | 0.5 | A |
| Example 3 | A | 90 | 3 | 20 | 2.0 | A |
| Example 4 | A | 80 | <3 | 15 | 3.5 | A |
| Example 5 | A | 70 | <3 | 10 | 5.0 | A |
| Example 6 | A | 100 | 3 | 25 | 1.0 | A |
| Example 7 | A | 80 | 3 | 26 | 0.6 | A |
| Example 8 | A | 70 | <3 | 20 | 0.5 | A |
| Example 9 | B | - | - | - | - | - |

According to the results of Examples 1 to 4, as the amount of distilled water increased, the Li recovery rate as lithium hydroxide increased, and conversely, the Li recovery rate as lithium halide decreased. This is considered to be because as the amount of distilled water was increased, a large amount of lithium hydroxide was dissolved in the liquid component side when solid-liquid separation was performed, while the amount of lithium remaining in the solid component side was reduced.

According to the result of Example 5, by increasing the reaction time of lithium carbonate and calcium hydroxide, the Li recovery rate as lithium hydroxide increased, and conversely, the Li recovery rate as lithium halide decreased.

According to the results of Example 6, by lowering the reaction temperature of lithium carbonate and calcium hydroxide, the Li recovery rate as lithium hydroxide decreased, and conversely, the Li recovery rate as lithium halide increased. This is considered to be because as the reaction temperature of lithium carbonate and calcium hydroxide was lowered, the reaction between lithium carbonate and calcium hydroxide was suppressed, and the amount of lithium hydroxide produced was reduced, and as a result, the amount of lithium hydroxide dissolved into the liquid component side during solid-liquid separation was reduced, while the amount of lithium remaining on the solid component side was increased.

According to the results of Examples 7 and 8, as the blending ratio of calcium hydroxide to lithium carbonate (calcium hydroxide/lithium carbonate) was decreased, the Li recovery rate as lithium hydroxide decreased, and conversely, the Li recovery rate as lithium halide increased.

In Examples 1 to 8, the Li recovery rate as lithium hydroxide was suppressed to a relatively low level, and lithium halide could be recovered accordingly. According to the method, lithium hydroxide can be efficiently obtained from the liquid component side, and a sulfide solid electrolyte raw material containing lithium can also be obtained from the solid component side. According to the method, lithium hydroxide can be efficiently obtained from the liquid component side, and a sulfide solid electrolyte raw material containing lithium can also be obtained from the solid component side.

In addition, the obtained lithium hydroxide (lithium hydroxide-containing composition) contained aluminum, zinc, and sulfate ions, and had good lithium ion conductivity.

Then, a sulfide solid electrolyte could be efficiently produced using lithium hydroxide and lithium bromide obtained in the same production process. In addition, the lithium ion conductivity of the sulfide solid electrolyte was also good.

On the other hand, according to the results of Example 9, it was found that when the amount of distilled water to which lithium carbonate was added was excessively increased, Li could not be recovered as lithium hydroxide and Li could not be recovered as lithium halide. Therefore, lithium bromide could not be produced, and a sulfide solid electrolyte could not be produced using lithium hydroxide and lithium bromide.

Although various embodiments have been described above with reference to the drawings, it is needless to say that the present invention is not limited to such examples. It should be understood by those skilled in the art that various modifications, combinations, subcombinations and alterations may occur depending on design requirements and other factors insofar as they are within the scope of the appended claims or the equivalents thereof. In addition, the components in the above-described embodiments may be arbitrarily combined without departing from the gist of the invention.

The present application is based on Japanese Patent Application No. 2023 -031335 filed on March 1, 2023, the contents of which are incorporated herein by reference.

## Claims

1. A method for producing lithium hydroxide, comprising:
reacting lithium carbonate with calcium hydroxide in a liquid to obtain a solution comprising lithium hydroxide;
subjecting the solution to solid-liquid separation into a liquid component comprising the lithium hydroxide and a solid component comprising lithium derived from the lithium carbonate; and
recovering the lithium hydroxide from the liquid component.

2. The method for producing lithium hydroxide according to claim 1, wherein an amount of water with respect to a total liquid in which the lithium carbonate and the calcium hydroxide are reacted is 70 mass% to 96 mass%.

3. The method for producing lithium hydroxide according to claim 1, wherein a blending ratio of the calcium hydroxide to the lithium carbonate (calcium hydroxide/lithium carbonate) is 0.2 to 1.1 on a molar basis.

4. The method for producing lithium hydroxide according to claim 1, wherein a temperature of the liquid when the lithium carbonate and the calcium hydroxide are reacted is 10°C to 95°C.

5. A method for producing lithium sulfide, comprising reacting the lithium hydroxide obtained by the production method according to any one of claims 1 to 4 with hydrogen sulfide to produce lithium sulfide.

6. A method for producing a sulfide solid electrolyte, wherein the lithium sulfide obtained by the production method according to claim 5 is used as a raw material.

7. A method for producing a sulfide solid electrolyte raw material comprising lithium, comprising:
reacting lithium carbonate with calcium hydroxide in a liquid to obtain a solution comprising lithium hydroxide;
subjecting the solution to solid-liquid separation into a liquid component comprising the lithium hydroxide and a solid component comprising lithium derived from the lithium carbonate; and
removing calcium in the solid component to obtain a sulfide solid electrolyte raw material comprising lithium from the solid component.

8. The method for producing a sulfide solid electrolyte raw material comprising lithium according to claim 7, wherein the calcium in the solid component is removed by adding sulfate ions to the solid component.

9. The method for producing a sulfide solid electrolyte raw material comprising lithium according to claim 7, wherein the sulfide solid electrolyte raw material comprising lithium is a lithium halide or lithium sulfate.

10. A method for producing a sulfide solid electrolyte, comprising using the sulfide solid electrolyte raw material comprising lithium obtained by the production method according to any one of claims 7 to 9.

11. A method for producing lithium hydroxide and a sulfide solid electrolyte raw material comprising lithium, comprising:
reacting lithium carbonate with calcium hydroxide in a liquid to obtain a solution comprising lithium hydroxide;
subjecting the solution to solid-liquid separation into a liquid component comprising the lithium hydroxide and a solid component comprising lithium derived from the lithium carbonate;
recovering the lithium hydroxide from the liquid component; and
removing calcium in the solid component to obtain a sulfide solid electrolyte raw material comprising lithium from the solid component.

12. A method for producing a sulfide solid electrolyte, wherein lithium sulfide obtained by reacting the lithium hydroxide obtained by the production method according to claim 11 with hydrogen sulfide and the sulfide solid electrolyte raw material comprising lithium obtained by the production method according to claim 11 are used as raw materials.

13. A lithium hydroxide-containing composition for synthesizing a sulfide solid electrolyte, comprising lithium hydroxide and zinc.

14. The lithium hydroxide-containing composition for synthesizing a sulfide solid electrolyte according to claim 13, further comprising aluminum.

15. The lithium hydroxide-containing composition for synthesizing a sulfide solid electrolyte according to claim 14, wherein a sum of a zinc concentration and an aluminum concentration is 10 ppm by mass or more.

16. The lithium hydroxide-containing composition for synthesizing a sulfide solid electrolyte according to any one of claims 13 to 15, further comprising 10 ppm by mass or more of calcium.

17. A lithium sulfide-containing composition for synthesizing a sulfide solid electrolyte, comprising lithium sulfide and zinc.

18. The lithium sulfide-containing composition for synthesizing a sulfide solid electrolyte according to claim 17, further comprising aluminum.

19. The lithium sulfide-containing composition for synthesizing a sulfide solid electrolyte according to claim 18, wherein a sum of a zinc concentration and an aluminum concentration is 10 ppm by mass or more.

20. The lithium sulfide-containing composition for synthesizing a sulfide solid electrolyte according to any one of claims 17 to 19, further comprising 10 ppm by mass or more of calcium.

21. A lithium halide-containing composition for synthesizing a sulfide solid electrolyte, comprising a lithium halide and at least one of sulfate ions, phosphate ions, and fluorine ions, wherein a concentration of the ions is 10 mass% or less.
